(19) Europäisches Patentamt
European Patent Office
Office européen des brevets

(11) **EP 4 155 758 A1**

(12) **EUROPEAN PATENT APPLICATION**

(43) Date of publication:
**29.03.2023 Bulletin 2023/13**

(21) Application number: **22196283.0**

(22) Date of filing: **19.09.2022**

(51) International Patent Classification (IPC):
**G01S 7/48** (2006.01)          **G01S 17/86** (2020.01)
**G01S 17/89** (2006.01)          **G06T 7/80** (2017.01)
**G06T 11/00** (2006.01)

(52) Cooperative Patent Classification (CPC):
**G01S 17/89; G01S 7/4808; G01S 17/86;
G06T 11/00; G06T 15/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 JP 2021155517**

(71) Applicant: **Canon Kabushiki Kaisha
Ohta-ku
Tokyo 146-8501 (JP)**

(72) Inventors:
• **URANO, Yuta
Ohta-ku, 146-8501 (JP)**
• **WATANABE, Gaku
Ohta-ku, 146-8501 (JP)**
• **ONO, Tachio
Ohta-ku, 146-8501 (JP)**
• **NAKAHARA, Ikunari
Ohta-ku, 146-8501 (JP)**

(74) Representative: **TBK
Bavariaring 4-6
80336 München (DE)**

(54) **INFORMATION PROCESSING DEVICE, CONTROL METHOD, AND NON-TRANSITORY COMPUTER-READABLE MEDIA**

(57)    An information processing device (200) includes one or more memories and one or more processors. The one or more processors and the one or more memories are configured to receive control information and data that contains three-dimensional position information generated by a three-dimensional range sensor (100) and convert, based on the received control information, the three-dimensional position information contained in the data received from the three-dimensional range sensor into two-dimensional image data containing information on a distance from a predetermined viewpoint.

FIG. 1

EP 4 155 758 A1

**Description**

BACKGROUND

Field of the Disclosure

The present disclosure relates to an information processing device that performs image processing on data obtained by a three-dimensional (3D) range sensor.

Description of the Related Art

A known system for monitoring, for example, an intersection, a railroad crossing, or a factory, uses network cameras. Such a monitoring system may be required to obtain an accurate distance between objects. For example, a monitoring system installed at an intersection can accurately infer the cause of an accident if a distance between vehicles inferred by the system or a vehicle speed inferred by the system is accurate. Japanese Patent Laid-Open No. 2021-124496 discloses a light detection and ranging (LiDAR) sensor, which is a 3D range sensor.

For a LiDAR sensor used in combination with, for example, a system using network cameras, 3D data generated by the LiDAR sensor can be used for two-dimensional (2D) image data generated by the network cameras. However, the structure of 3D data is quite different from that of 2D image data. It is difficult for users to make full use of data obtained by a 3D range sensor, such as a LiDAR sensor.

SUMMARY

The present disclosure in its first aspect provides an information processing device as specified in claims 1 to 10.

The present disclosure in its second aspect provides a control method as specified in claim 11.

The present disclosure in its third aspect provides a non-transitory computer-readable media as specified in claim 12.

Further features of various embodiments will become apparent from the following description of exemplary embodiments with reference to the attached drawings.

BRIEF DESCRIPTION OF THE DRAWINGS

Fig. 1 is a block diagram illustrating an exemplary configuration of a system according to a first embodiment.
Figs. 2A to 2D are diagrams illustrating examples of point cloud images in the first embodiment.
Fig. 3 is a flowchart illustrating an exemplary process of generating a point cloud image in the first embodiment.
Figs. 4A and 4B illustrate examples of parameters in the first embodiment.
Fig. 5 is a diagram illustrating examples of coordinate systems in the first embodiment.

DESCRIPTION OF THE EMBODIMENTS

Embodiments of the present disclosure will be described in detail below with reference to the drawings. Some embodiments of the present disclosure are not limited to the following embodiments. The embodiments of the present disclosure may be preferred embodiments but should not be construed as limiting the scope of every embodiment.

First Embodiment

Configuration of System

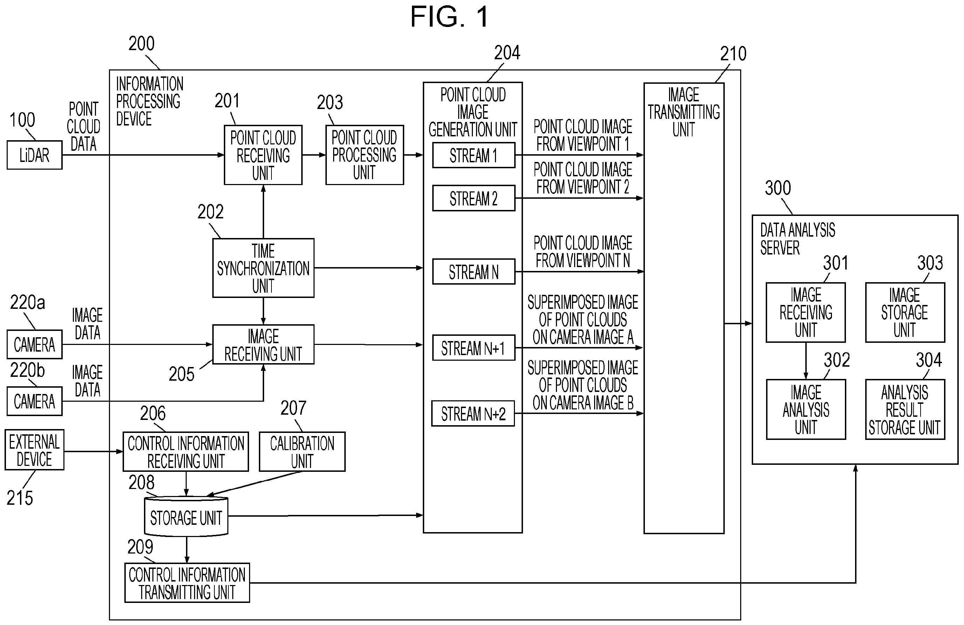

Fig. 1 is a block diagram illustrating an exemplary configuration of a system according to a first embodiment. The system of Fig. 1 is an example of a system for imaging a result of sensing by LiDAR.

The system of Fig. 1 includes a LiDAR sensor 100, an information processing device 200, an external device 215, cameras 220, and a data analysis server 300. These devices are connected or linked to each other via communication units of the devices. These devices are connected in such a manner that the devices can communicate with each other. For example, the Transmission Control Protocol/Internet Protocol (TCP/IP) is used as a communication protocol for communication between the devices. In this embodiment, each device is connected to a predetermined network. The information processing device 200, the external device 215, and the data analysis server 300 may be edge servers or may be cloud servers.

The LiDAR sensor 100 is an active sensor capable of detecting the position of a measurement target in a 3D space. In other words, the LiDAR sensor 100 is a 3D range sensor.

The LiDAR sensor 100 in the embodiment includes a laser light source, an optical element, an actuator, a light-sensitive element, and a detection circuit. In the embodiment, the LiDAR sensor 100 measures the time between when laser light emitted from the laser light source was reflected by a measurement target and when reflected light was received by the light-sensitive element, thus determining a distance to the measurement target. The LiDAR sensor 100 causes the light-sensitive element to determine the intensity of reflected laser light, or reflection intensity.

The optical element and the actuator are used to scan surrounding measurement targets with laser light. The optical element is, for example, a reflecting mirror that reflects laser light. The actuator includes a driving element, such as a motor, and rotates the optical element at a predetermined speed to radiate laser light to the surrounding measurement targets. The detection circuit detects the position of a measurement target (reflection point of laser light) based on a result of receiving reflected light by the light-sensitive element, and outputs point cloud data.

In the embodiment, the position of a measurement target is represented by space coordinates relative to the point of origin. Hereinafter, the position of a measurement target will be represented by rectangular coordinates, or x, y, and z coordinates. The coordinates of each position are designated by capital letters, for example, (X, Y, Z). In the embodiment, the point of origin corresponds to a light-emitting portion of the laser light source.

Point cloud data is a data file into which the positions of scanned measurement targets are converted. The point cloud data is in the form of, for example, the point cloud data (PCD) file format or the polygon file format (PLY). The point cloud data contains 3D position information.

The LiDAR sensor 100 transmits generated point cloud data on the positions of the measurement targets to the information processing device 200. Furthermore, the LiDAR sensor 100 may transmit data on the reflection intensity of laser light reflected from each of the measurement targets to the information processing device 200 in addition to the point cloud data.

The above is an explanation of the LiDAR sensor 100.

The information processing device 200 is a computing device. Examples of the information processing device 200 include an on-premises server, a multi-access edge computing (MEC) server, and a cloud server. The information processing device 200 includes a central processing unit (CPU), a random access memory (RAM), a read-only memory (ROM), a graphics processing unit (GPU), and a communication unit.

The CPU is a processor for controlling components of the information processing device 200 in response to an input signal or in accordance with a program, which will be described later. Instead of the CPU controlling the entire device, multiple pieces of hardware may share processes to control the entire device.

The RAM is a working memory. The RAM is used as, for example, a buffer memory to temporarily store image data or a working space for the CPU.

The ROM is a nonvolatile memory. The ROM stores, for example, a program, which will be described later, to be executed by the CPU.

The GPU is a specialized processor for graphics processing.

The communication unit is an interface for connection to external devices. In the embodiment, the communication unit can be connected to external devices by a wireless communication method, such as via a wireless LAN, conforming to a standard, such as the Bluetooth® standard or the IEEE 802.11 standard. In the embodiment, the communication unit can be connected to external devices by a wired communication method conforming to a standard, such as Ethernet.

The information processing device 200 includes components implemented by the above-described pieces of hardware. In the embodiment, the RAM, the ROM, the GPU, and the communication unit are controlled by the CPU.

The information processing device 200 includes a point cloud receiving unit 201, a time synchronization unit 202, a point cloud processing unit 203, a point cloud image generation unit 204, an image receiving unit 205, a control information receiving unit 206, a calibration unit 207, a storage unit 208, a control information transmitting unit 209, and an image transmitting unit 210.

The point cloud receiving unit 201 receives point cloud data from the LiDAR sensor 100 through network communication. The point cloud receiving unit 201 is implemented through processing by the communication unit.

The time synchronization unit 202 timestamps each of the point cloud data received by the point cloud receiving unit 201 and image data received by the image receiving unit 205, which will be described later, for time synchronization between the point cloud data and the image data. The time synchronization unit 202 is implemented through processing by the CPU.

The point cloud processing unit 203 analyzes the point cloud data received by the point cloud receiving unit 201. For example, the point cloud processing unit 203 performs filtering or clustering on the point cloud data. The point cloud processing unit 203 is implemented through processing by the GPU.

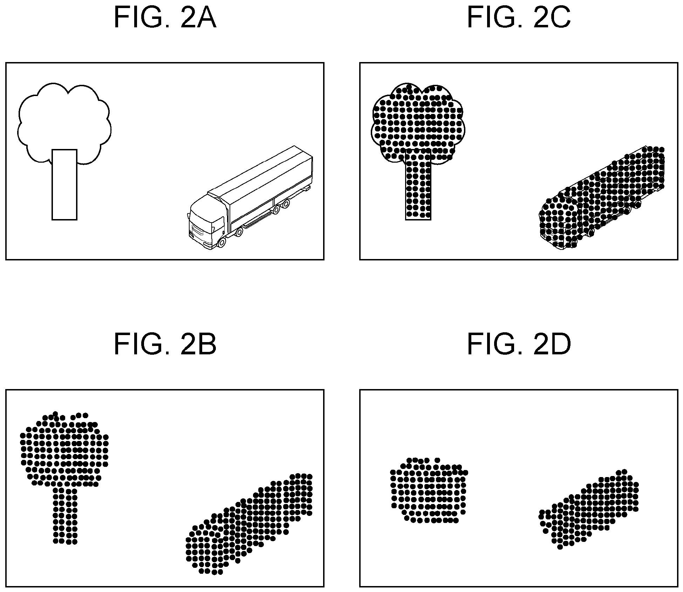

The point cloud image generation unit 204 generates a 2D point cloud image based on the point cloud data received by the point cloud receiving unit 201 and control information, which will be described later. A point cloud image will be described later with reference to Figs. 2A to 2D. Furthermore, the point cloud image generation unit 204 generates pieces of video data based on the point cloud image. The pieces of video data generated based on the point cloud image are transmitted through streaming to the data analysis server 300, which will be described later. The pieces of video data are individually assigned IDs. The point cloud image generation unit 204 is implemented through processing by the GPU.

The image receiving unit 205 receives image data transmitted from the cameras 220, which will be described later. The image receiving unit 205 is implemented through processing by the communication unit.

The control information receiving unit 206 receives control information from the external device 215 through network communication. The control information contains parameters that are used to convert point cloud data into a point cloud image. The control information receiving unit 206 is implemented through processing by the communication unit. The external device 215 is an information processing device, such as a personal computer (PC), a server, or a tablet terminal. The external device 215 communicates with the cameras 220 and the LiDAR sensor 100 to generate control information. The parameters are received through, for example, Hypertext Transfer Protocol (HTTP) communication using a web application programming interface (WebAPI). The received control information is recorded in the storage unit 208.

The calibration unit 207 computes parameters to unify the coordinate systems of sensors, such as the LiDAR sensor 100 and the cameras 220. The computed parameters are recorded in the storage unit 208. The calibration unit 207 is implemented through processing by the CPU and the GPU.

The storage unit 208 records, for example, data received by the control information receiving unit 206 and data generated by the calibration unit 207. The storage unit 208 is implemented by the RAM and/or the ROM under the control of the CPU. Examples of the ROM include a hard disk drive (HDD), a solid-state drive (SSD), and a flash memory.

The control information transmitting unit 209 transmits the parameters recorded in the storage unit 208 to the data analysis server 300, which will be described later. The control information transmitting unit 209 is implemented through processing by the communication unit. The parameters are transmitted through, for example, HTTP communication using the WebAPI.

The image transmitting unit 210 transmits data on an image, such as video data or image data, to the data analysis server 300 through network communication. The image transmitting unit 210 is implemented through processing by the communication unit. For example, the image transmitting unit 210 transmits video data through streaming. Video streaming uses a communication protocol, such as Real Time Streaming Protocol (RTSP) or Real Time Messaging Protocol (RTMP).

The above is an explanation of the information processing device 200.

Each camera 220 is an image sensing device having a communication function. The camera 220 includes a communication unit and an image sensing unit. The camera 220 is capable of transmitting a still image and a moving image captured by the image sensing unit to the information processing device 200 via the communication unit. Examples of the camera 220 include a network camera and a webcam. Hereinafter, still image data and moving image data captured by the camera 220 will also be referred to as "camera images".

The data analysis server 300 includes an image receiving unit 301, an image analysis unit 302, an image storage unit 303, and an analysis result storage unit 304. The data analysis server 300 is a computing device. Examples of the data analysis server 300 include an on-premises server, an MEC server, and a cloud server. The data analysis server 300 includes a CPU, a RAM, a ROM, a GPU, and a communication unit. The components of the data analysis server 300 are implemented by these pieces of hardware.

The CPU is a processor for controlling the components of the data analysis server 300 in response to an input signal or in accordance with a program, which will be described later. Instead of the CPU controlling the entire server, multiple pieces of hardware may share processes to control the entire server.

The RAM is a working memory. The RAM is used as, for example, a buffer memory to temporarily store image data or a working space for the CPU.

The ROM is a nonvolatile memory. The ROM stores, for example, a program, which will be described later, to be executed by the CPU.

The GPU is a specialized processor for graphics processing.

The communication unit is an interface for connection to external devices. In the embodiment, the communication unit can be connected to external devices by a wireless communication method, such as via a wireless LAN, conforming to a standard, such as the Bluetooth® standard or the IEEE 802.11 standard. In the embodiment, the communication unit can be connected to external devices by a wired communication method conforming to a standard, such as Ethernet.

The following components of the data analysis server 300 are implemented by the above-described pieces of hardware. In the embodiment, the RAM, the ROM, the GPU, and the communication unit are controlled by the CPU.

The image receiving unit 301 receives video data and a point cloud image from the information processing device 200 via the communication unit. The image receiving unit 301 may be at least partially implemented through processing by the GPU. The image receiving unit 301 may be at least partially implemented through processing by the communication unit.

The image analysis unit 302 infers, based on the point cloud image received by the image receiving unit 301, a distance to an object as a measurement target, the velocity of the object, and the type of object, for example. The image analysis unit 302 is implemented through processing by the GPU.

The image storage unit 303 stores the point cloud image received by the image receiving unit 301. The image storage unit 303 is implemented by the RAM and/or the ROM under the control of the CPU. Examples of the ROM include an HDD, an SSD, and a flash memory.

The analysis result storage unit 304 stores a result of analysis by the image analysis unit 302.

The analysis result storage unit 304 is implemented by the RAM and/or the ROM under the control of the CPU. The ROM is, for example, an HDD, an SSD, or a flash memory.

The data analysis server 300 may operate as the above-described external device 215.

Point Cloud Image Modes

Point cloud image modes are modes of the information processing device 200 that are used to select setting for generation of a 2D point cloud image based on point cloud data. In the embodiment, the point cloud image modes include a user-specified viewpoint mode, a camera viewpoint mode, and a camera-image superimposition mode.

The camera viewpoint mode is a mode to generate a 2D point cloud image viewed from a point on an image sensing plane of an image sensing element of the camera 220.

The camera-image superimposition mode is a mode to generate a 2D image obtained by generating a point cloud image viewed from a point on the image sensing plane of the image sensing element of the camera 220 and combining or superimposing the point cloud image with or on a still image captured by the camera 220.

The user-specified viewpoint mode is a mode to generate a 2D point cloud image viewed from a viewpoint set by a user. For example, when the user sets an overhead viewpoint, a 2D point cloud image viewed from the overhead viewpoint is generated based on point cloud data.

Point cloud images generated in the point cloud image modes will now be described with reference to Figs. 2A to 2D. Fig. 2A illustrates an example of a still image captured by the camera 220.

Fig. 2B illustrates an example of a point cloud image generated in the camera viewpoint mode. Fig. 2C illustrates an example of an image generated in the camera-image superimposition mode. The image of Fig. 2C is equivalent to data indicating a superimposition of the images of Figs. 2A and 2B. Fig. 2D illustrates an example of a point cloud image generated in the user-specified viewpoint mode. The point cloud image of Fig. 2D in the embodiment is a point cloud image viewed from an overhead viewpoint. Although the images of Figs. 2A to 2D are monochrome images in this embodiment, the images may be color images. Each point may have any size. For example, a remote location can be represented by a small point, and a near location can be represented by a large point.

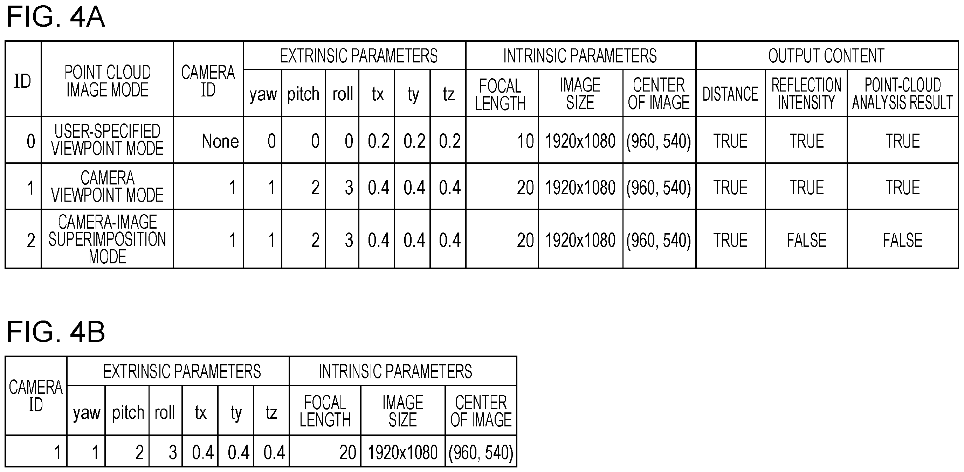

For preprocessing for processes in the camera viewpoint mode and the camera-image superimposition mode, the calibration unit 207 can calibrate the sensors to calibrate extrinsic parameters and intrinsic parameters. For example, the calibration unit 207 can calibrate the sensors using a calibration board. The information processing device 200 can associate extrinsic and intrinsic parameters obtained by the calibration with camera identification (ID) and store the parameters associated with the camera ID in the storage unit 208. For example, the stored data contains calibration parameters illustrated in Fig. 4B.

Method of Generating Point Cloud Image

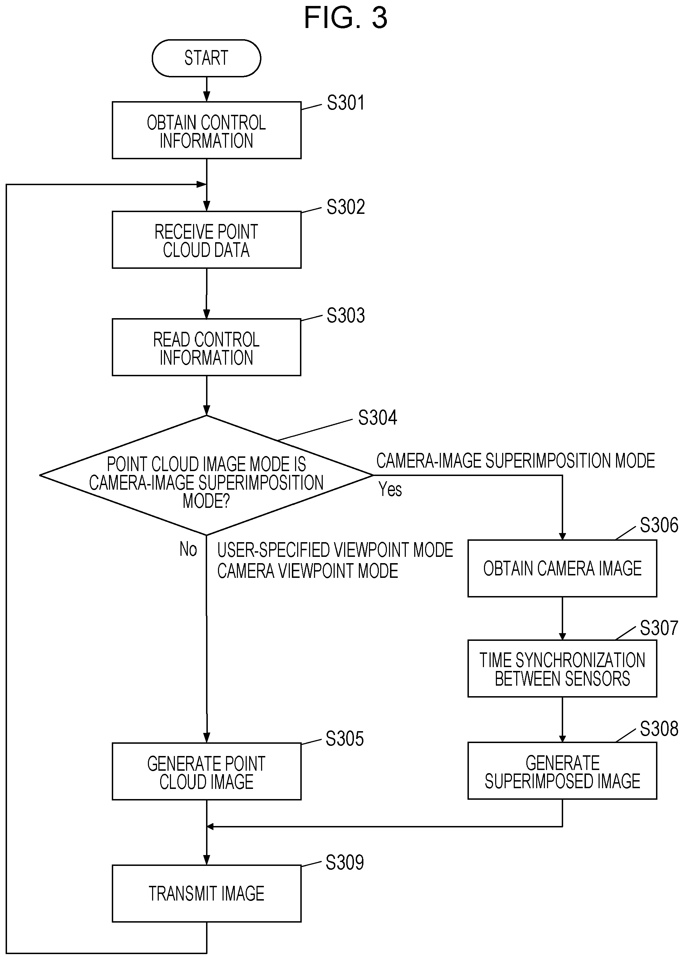

A process of generating a point cloud image through the information processing device 200 will now be described with reference to a flowchart of Fig. 3. The process by the information processing device 200 is implemented by loading software recorded in the ROM into the RAM and causing the CPU to execute the software.

In step S301, the CPU of the information processing device 200 obtains control information from the external device 215 via the control information receiving unit 206. The control information contains viewpoint information that is used to generate an image based on at least point cloud data and information indicating a point cloud image mode for output. The viewpoint information is numerical value information indicating extrinsic parameters, such as the orientation (e.g., yaw, pitch, and roll) of a camera and the position of the camera, and intrinsic parameters of the camera. A method of transmitting and receiving the control information will now be described.

The control information is transmitted through, for example, HTTP communication using the WebAPI. In this case, the control information is described in, for example, the JavaScript Object Notation (JSON) format. Thus, the external device 215 can readily transmit the control information using any application. Exemplary control information described in the JSON format in the embodiment is as follows.

```
{
```

```
    "yaw" : 0,
    "pitch" : 0,
    "roll" : 0,
    "tx" : 0.2,
    "ty" : 0.2
    "tz" : 0.2,
    "f" : 10,
    "x_size" : 1920,
    "y_size" : 1080,
    "view_mode" : "user specified",
    "distance" : True,
    "intensity" : True,
    "analysis_result" : True
  }
```

The control information described in the JSON format indicates the following parameters.

```
(yaw, pitch, roll) = (0°, 0°, 0°)
translation parameters = (0.2 m, 0.2 m, 0.2 m)
focal length = 10
image size = 1920 × 1080
point cloud image mode = user-specified viewpoint mode
distance display = ON (distance is displayed)
display of reflection intensity of laser light = ON (reflection intensity of laser light is
displayed)
display of analysis result = ON (result of analysis is displayed)
```

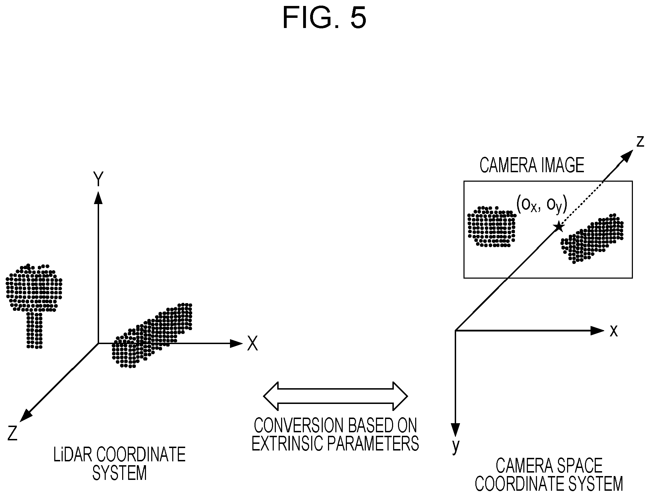

The distance display, the display of the reflection intensity of laser light, and analysis will be described later.
The CPU of the information processing device 200 stores the control information in the storage unit 208 in response to receiving the control information via the control information receiving unit 206. Fig. 4A illustrates examples of data stored in the storage unit 208. The CPU of the information processing device 200 manages, for example, the point cloud image modes, the extrinsic parameters, the intrinsic parameters in association with the IDs of pieces of video data to be transmitted through streaming.
In step S302, the point cloud receiving unit 201 receives point cloud data from the LiDAR sensor 100.
In step S303, the CPU of the information processing device 200 reads a point cloud image mode stored in the storage unit 208.
In step S304, the CPU of the information processing device 200 switches an operation to another operation depending on the read point cloud image mode. In response to determining that the point cloud image mode is the user-specified viewpoint mode or the camera viewpoint mode, the CPU executes an operation in step S305. In response to determining that the point cloud image mode is the camera-image superimposition mode, the CPU executes an operation in step S306.
First, it is assumed that the point cloud image mode is the user-specified viewpoint mode or the camera viewpoint mode.
In step S305, the point cloud image generation unit 204 generates a point cloud image based on the point cloud data received from the LiDAR sensor 100 and the control information read from the storage unit 208.
A method of generating a point cloud image in the embodiment will now be described.
First, preprocessing is performed to represent points in the point cloud data on a 2D point cloud image. Some examples of preprocessing will be described. For purposes of illustration, the coordinates of a point in the point cloud data will be referred to as LiDAR coordinates, and the coordinates of a point in a point cloud image will be referred to as camera space coordinates. As illustrated in Fig. 5, the camera space coordinates, which are 3D coordinates, are obtained by converting, or projecting, the LiDAR coordinates. The LiDAR coordinates are represented as (X, Y, Z), and the camera space coordinates are represented as (x, y, z). In the following examples, the point cloud image generation unit 204 converts the point cloud data into a point cloud image in the red-green-blue (RGB) color model.

Example 1 where distance values are displayed

In this example, a distance value is processed so that the distance value can be represented as, for example, 24-bit color information. For example, the distance value is normalized to a value ranging from 1 to ($2^{24}$ - 1) and is then recorded. In the embodiment, the distance value indicates a distance from the point of origin of the camera space coordinate system rather than of the LiDAR coordinate system. For example, the distance value may be a z coordinate value at a distance from the point of origin of the camera space coordinate system. The distance value may be represented using, for example, any channel (color) of the RGB color model. In this case, the distance value may be represented as 8-bit color information. For example, the distance value is normalized to a value ranging from 1 to ($2^8$ - 1) and is then recorded. The distance value is data to be displayed when "distance display" is ON.

Example 2 where the reflection intensity of laser light is displayed

In this example, the reflection intensity of laser light is processed based on the reflection intensity of laser light contained in the point cloud data so that the reflection intensity can be represented as, for example, 24-bit color information. For example, the reflection intensity of laser light is normalized to a value ranging from 1 to ($2^{24}$ - 1) and is then recorded. The reflection intensity of laser light may be represented using any channel (color) of the RGB color model. In this case, the reflection intensity of laser light may be represented as 8-bit color information. For example, the reflection intensity of laser light is normalized to a value ranging from 1 to ($2^8$ - 1) and is then recorded. The reflection intensity of laser light is data to be displayed when "display of the reflection intensity of laser light" is ON.

Example 3 where the result of point cloud analysis is displayed

In this example, the point cloud processing unit 203 performs clustering on the point cloud data by using a clustering algorithm, such as density-based spatial clustering of applications with noise (DBSCAN). A result of clustering by the point cloud processing unit 203 is converted into image data. The point cloud processing unit 203 may further perform filtering, such as ground removal, to increase the accuracy of clustering. Furthermore, the point cloud processing unit 203 may perform semantic segmentation on the point cloud data by using a segmentation algorithm, such as RandLA-Net. As in Examples 1 and 2, a clustering ID obtained by analysis or a label ID indicating a segmentation result is processed so that the ID can be represented as 24-bit color information. For example, data obtained by analysis is normalized to a value ranging from 1 to ($2^{24}$ - 1) and is then recorded. The data obtained by analysis may be represented using any channel (color) of the RGB color model. In this case, the data obtained by analysis may be represented as 8-bit color information. For example, the data obtained by analysis is normalized to a value ranging from 1 to ($2^8$ - 1) and is then recorded. The data generated by the point cloud processing unit 203 is data to be displayed when "display of analysis result" is ON.

Example 4 where pixel values of a camera image are displayed

A process is performed to record the LiDAR coordinates (X, Y, Z) in the point cloud data in association with pixel values (RGB) in the corresponding camera image.
The four examples have been described above. The examples may be performed simultaneously.
For example, the distance value (Example 1), the reflection intensity (Example 2), and the analysis result (Example 3) can be assigned to the R, G, and B channels, respectively, and be represented as three different values. The data generated by the above-described preprocessing is recorded in association with the LiDAR coordinates (X, Y, Z) in the corresponding point cloud data.
Then, the point cloud image generation unit 204 converts the coordinates of color information into camera plane coordinates. In the embodiment, the LiDAR coordinates of color information of a point cloud are subjected to conversion (perspective projection) into the camera plane coordinates by using Equation 1. The camera plane coordinates correspond to a point cloud image. Conversion from the LiDAR coordinates into the camera space coordinates uses the extrinsic parameters. The extrinsic parameters are expressed in the second matrix from the right in the right side of Equation 1. Conversion from the camera space coordinates into the camera plane coordinates uses the intrinsic parameters. The intrinsic parameters are expressed in the third matrix from the right in the right side of Equation 1.

$$\bullet \begin{bmatrix} x \\ y \\ 1 \end{bmatrix} = \begin{bmatrix} fk_x & 0 & o_x & 0 \\ 0 & fk_y & o_y & 0 \\ 0 & 0 & 1 & 0 \end{bmatrix} \begin{bmatrix} r_{11} & r_{12} & r_{13} & t_x \\ r_{21} & r_{22} & r_{23} & t_y \\ r_{31} & r_{23} & r_{33} & t_z \\ 0 & 0 & 0 & 1 \end{bmatrix} \begin{bmatrix} X \\ Y \\ Z \\ 1 \end{bmatrix}$$

...(1)

In Equation 1, x and y respectively denote the x and y coordinates of each pixel at the camera plane coordinates, X, Y, and Z define the position of each point of point clouds at the LiDAR coordinates, f denotes the focal length of the camera 220, $k_x$ denotes the number of pixels corresponding to the lateral dimension of an image, and $k_y$ denotes the number of pixels corresponding to the longitudinal dimension of the image.

In Equation 1, $o_x$ and $o_y$ respectively denote the x and y coordinates at the center of a camera image. In Fig. 5, the coordinates at the center of the camera image are represented by a star-shaped mark, which can be distinguished from points of the point clouds. In Equation 1, $r_{11}, r_{12}, r_{13}, r_{21}, r_{22}, r_{23}, r_{31}, r_{32}, r_{33}, t_x, t_y$, and $t_z$ are the extrinsic parameters. These extrinsic parameters are used for rotation and translation of each point from the LiDAR coordinate system into the camera space coordinate system. The parameters $r_{11}$ to $r_{33}$ are computed from the yaw, pitch, and roll values.

The point cloud image generation unit 204 in the embodiment uses Equation 1 for each point in the LiDAR coordinate system, thus achieving perspective projection of the point clouds at the LiDAR coordinates on the camera plane coordinates. Color information of coordinates with no point in the camera plane coordinate system is represented by a value of zero so that these coordinates are distinguished from coordinates with the points of the point clouds.

The above-described operation in step S305 generates a point cloud image. The operation in step S305 is followed by an operation in step S309.

In step S309, the image transmitting unit 210 transmits the image generated in step S305 to the data analysis server 300. For example, the image transmitting unit 210 transmits the image through streaming by using a communication protocol, such as RTSP.

Next, it is assumed that it is determined in step S304 that the point cloud image mode is the camera-image superimposition mode. In this mode, a superimposed image is generated by superimposing the point cloud data obtained by the LiDAR sensor 100 on image data captured by any camera 220.

Superimposing the point cloud data on the image data captured by the camera 220 enables, for example, an object that is not detected based only on image data captured by the camera 220 at night-time, to be represented by a point cloud.

In step S306, the image receiving unit 205 receives a camera image captured by any camera 220.

In step S307, the CPU of the information processing device 200 determines a camera image and a point cloud image that were obtained at the same time. Thus, the camera image and the point cloud image obtained at the same time can be superimposed. For example, in response to receiving camera image data from any camera 220, the CPU of the information processing device 200 timestamps the camera image data. In response to receiving point cloud data from the LiDAR sensor 100, the CPU of the information processing device 200 timestamps the point cloud data. The CPU of the information processing device 200 treats, as pieces of data obtained at the same time, camera image data and point cloud data whose timestamps are closest in time to each other. Another exemplary timestamping process by the information processing device 200 will now be described. For example, the CPU of the information processing device 200 causes a global positioning system (GPS) unit (not illustrated) of the information processing device 200 to be synchronized in time with GPS units of the LiDAR sensor 100 and the cameras 220. The LiDAR sensor 100 timestamps point cloud data. Each camera 220 timestamps camera image data. The information processing device 200 indirectly timestamps the point cloud data and the camera image data by receiving these pieces of data. In this case, the CPU of the information processing device 200 treats, as pieces of data obtained at the same time, point cloud data and camera image data whose timestamps are closest in time to each other.

In step S308, the point cloud image generation unit 204 generates a superimposed image based on the point cloud data and the camera image data, which are determined in step S307 to have been obtained at the same time, such that a point cloud image is superimposed on the camera image. The point cloud image is generated from the point cloud data in the same manner as that in step S305. The explanation of the manner of generation is omitted accordingly. To superimpose the point cloud image on the camera image, the point cloud image generation unit 204 writes and records pixels with points in the point cloud image over the camera image. The point cloud image generation unit 204 may embed data contained in the point cloud image in a specific channel of each pixel of the camera image. For example, if the camera image is a red-green-blue-alpha (RGBA) image, the point cloud image generation unit 204 can embed data contained in the point cloud image in the A channel. Furthermore, the point cloud image generation unit 204 can convert pixel values of pixels of the camera image into grayscale values, store the grayscale values in the R channel, and embed data contained in the point cloud image in the G and B channels, which are available.

The image data generated in step S308 is transmitted in step S309 by the image transmitting unit 210.

After the operation in step S309, the process returns to the operation in step S302. The process of the flowchart is repeated. In response to a user operation to terminate the process, the information processing device 200 terminates the process of the flowchart.

The above is an explanation of the method of generating a point cloud image. Point clouds obtained by a 3D range sensor, such as a LiDAR sensor, are used as image data to generate a point cloud image. This allows the 3D range sensor, such as a LiDAR sensor, to be treated almost like a network camera. Thus, a user can grasp accurate distance information in a monitoring system, for example.

An exemplary use case of a device for receiving a point cloud image will now be described with respect to, as an example, the data analysis server 300 in Fig. 1. The data analysis server 300 is a server for analyzing a point cloud image received from the information processing device 200 and accumulating analysis results. Examples of analysis include object velocity detection. The data analysis server 300 records the point cloud image received via the image receiving unit 301 in the image storage unit 303, and performs analysis based on the stored point cloud image. An example of analysis will be described below.

For example, to obtain the velocity of an object, the image analysis unit 302 of the data analysis server 300 calculates the velocity by using differences between distance information items contained in recorded point cloud images and the timestamps of the images.

Furthermore, in a case where a point cloud image is a superimposed image of point clouds on a camera image, the image analysis unit 302 detects objects, such as vehicles and humans, in a captured camera image through object recognition based on deep learning using a machine learning model, such as YOLOv3. The image analysis unit 302 may obtain the velocity of each of the detected objects and a distance to each of the detected objects. In addition, the image analysis unit 302 may identify, based on the detected objects, a location in the camera image. For example, when a train is detected, the image analysis unit 302 identifies a railroad crossing. When a large number of cars are detected, the image analysis unit 302 identifies an intersection or a road, for example.

Furthermore, for example, the image analysis unit 302 may generate, based on a received point cloud image, a point cloud image from any viewpoint, such as an overhead viewpoint, and calculate a distance between objects or the velocity of each object from the generated point cloud image.

The results of analysis by the image analysis unit 302 are recorded in the analysis result storage unit 304.

These analysis processes may be performed by the information processing device 200. In this case, the information processing device 200 causes the analysis results to be contained in metadata on a point cloud image and transmits the metadata to the data analysis server 300.

The system according to the embodiment has been described above. The above-described configuration of the system is intended to be an example only. The configuration is not limited to this example. For example, a process by the data analysis server 300 may be performed by the information processing device 200, and a process by the information processing device 200 may be performed by the LiDAR sensor 100. Other Embodiments

Some embodiments are not limited to the above-described embodiments. The components can be modified and embodied without departing from the spirit and scope of the present disclosure in an implementation stage. The components disclosed in the above-described embodiments can be appropriately combined to form a variety of embodiments. For example, some of all the components described in the embodiments may be eliminated. Furthermore, the components in the different embodiments may be appropriately combined.

Some embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has described exemplary embodiments, it is to be understood that some embodiments are not limited to the disclosed exemplary embodiments. The scope of the following claims is to be accorded the broadest interpretation so as to encompass all such modifications and equivalent structures and functions.

An information processing device (200) includes one or more memories and one or more processors. The one or more processors and the one or more memories are configured to receive control information and data that contains three-dimensional position information generated by a three-dimensional range sensor (100) and convert, based on the received control information, the three-dimensional position information contained in the data received from the three-dimensional range sensor into two-dimensional image data containing information on a distance from a predetermined viewpoint.

**Claims**

1.  An information processing device (200) comprising:

    one or more memories; and
    one or more processors, wherein the one or more processors and the one or more memories are configured to:

    receive control information and data that contains three-dimensional position information generated by a
    three-dimensional range sensor (100); and
    convert, based on the received control information, the three-dimensional position information contained
    in the data received from the three-dimensional range sensor into two-dimensional image data containing
    information on a distance from a predetermined viewpoint.

2.  The information processing device according to Claim 1, wherein the one or more processors and the one or more
    memories are further configured to:

    obtain two-dimensional image data from image sensing means (220); and
    convert the three-dimensional position information into the two-dimensional image data corresponding to the
    obtained two-dimensional image data.

3.  The information processing device according to Claim 2, wherein the one or more processors and the one or more
    memories are further configured to:

    perform calibration of coordinates for the image sensing means and coordinates for the three-dimensional range
    sensor; and
    convert, based on a result of the calibration, the three-dimensional position information into the two-dimensional
    image data corresponding to the obtained two-dimensional image data.

4.  The information processing device according to Claim 2 or 3, wherein the one or more processors and the one or
    more memories are further configured to combine the two-dimensional image data obtained from the image sensing
    means with the two-dimensional image data.

5.  The information processing device according to Claim 4, wherein the one or more processors and the one or more
    memories are further configured to combine the two-dimensional image data obtained from the image sensing
    means with the two-dimensional image data, the pieces of two-dimensional image data being generated at times
    closest to each other.

6.  The information processing device according to any one of Claims 2 to 5, wherein the control information contains
    information on coordinates for the three-dimensional range sensor and coordinates for the image sensing means.

7.  The information processing device according to any one of Claims 1 to 6,

    wherein the three-dimensional range sensor is a light detection and ranging (LiDAR) sensor, and
    wherein the one or more processors and the one or more memories are further configured to convert, as the
    three-dimensional position information, data received from the LiDAR sensor and indicating a reflection intensity
    of laser light from an object into the two-dimensional image data.

8.  The information processing device according to Claim 7, wherein the one or more processors and the one or more
    memories are further configured to:

    analyze the three-dimensional position information; and
    convert, as the three-dimensional position information, a result of the analysis into the two-dimensional image
    data.

9.  The information processing device according to Claim 8, wherein the analysis is clustering or semantic segmentation.

10. The information processing device according to any one of Claims 1 to 9, wherein the one or more processors and
    the one or more memories are further configured to convert the three-dimensional position information into the two-dimensional image data in accordance with a red-green-blue (RGB) color model.

11. A control method for an information processing device, the method comprising:

receiving control information and data that contains three-dimensional position information generated by a three-dimensional range sensor; and

converting, based on the received control information, the three-dimensional position information contained in the data received from the three-dimensional range sensor into two-dimensional image data containing information on a distance from a predetermined viewpoint.

12. A non-transitory computer-readable media storing instructions that, when executed by a computer, cause the computer to:

receive control information and data that contains three-dimensional position information generated by a three-dimensional range sensor; and

convert, based on the received control information, the three-dimensional position information contained in the data received from the three-dimensional range sensor into two-dimensional image data containing information on a distance from a predetermined viewpoint.

# FIG. 1

## FIG. 2A

## FIG. 2C

## FIG. 2B

## FIG. 2D

# FIG. 3

START

OBTAIN CONTROL INFORMATION —— S301

RECEIVE POINT CLOUD DATA —— S302

READ CONTROL INFORMATION —— S303

POINT CLOUD IMAGE MODE IS CAMERA-IMAGE SUPERIMPOSITION MODE? —— S304

CAMERA-IMAGE SUPERIMPOSITION MODE
Yes

No
USER-SPECIFIED VIEWPOINT MODE
CAMERA VIEWPOINT MODE

OBTAIN CAMERA IMAGE —— S306

TIME SYNCHRONIZATION BETWEEN SENSORS —— S307

GENERATE SUPERIMPOSED IMAGE —— S308

GENERATE POINT CLOUD IMAGE —— S305

TRANSMIT IMAGE —— S309

14

## FIG. 4A

| ID | POINT CLOUD IMAGE MODE | CAMERA ID | EXTRINSIC PARAMETERS | | | | | | INTRINSIC PARAMETERS | | | OUTPUT CONTENT | | |
|---|---|---|---|---|---|---|---|---|---|---|---|---|---|---|
| | | | yaw | pitch | roll | tx | ty | tz | FOCAL LENGTH | IMAGE SIZE | CENTER OF IMAGE | DISTANCE | REFLECTION INTENSITY | POINT-CLOUD ANALYSIS RESULT |
| 0 | USER-SPECIFIED VIEWPOINT MODE | None | 0 | 0 | 0 | 0.2 | 0.2 | 0.2 | 10 | 1920x1080 | (960, 540) | TRUE | TRUE | TRUE |
| 1 | CAMERA VIEWPOINT MODE | 1 | 1 | 2 | 3 | 0.4 | 0.4 | 0.4 | 20 | 1920x1080 | (960, 540) | TRUE | TRUE | TRUE |
| 2 | CAMERA-IMAGE SUPERIMPOSITION MODE | 1 | 1 | 2 | 3 | 0.4 | 0.4 | 0.4 | 20 | 1920x1080 | (960, 540) | TRUE | FALSE | FALSE |

## FIG. 4B

| CAMERA ID | EXTRINSIC PARAMETERS | | | | | | INTRINSIC PARAMETERS | | |
|---|---|---|---|---|---|---|---|---|---|
| | yaw | pitch | roll | tx | ty | tz | FOCAL LENGTH | IMAGE SIZE | CENTER OF IMAGE |
| 1 | 1 | 2 | 3 | 0.4 | 0.4 | 0.4 | 20 | 1920x1080 | (960, 540) |

# FIG. 5

Y

X

Z

LiDAR COORDINATE
SYSTEM

CONVERSION BASED ON
EXTRINSIC PARAMETERS

CAMERA IMAGE

z

$(o_x, o_y)$

x

y

CAMERA SPACE
COORDINATE SYSTEM

Europäisches
Patentamt

European
Patent Office

Office européen
des brevets

# EUROPEAN SEARCH REPORT

Application Number

EP 22 19 6283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FOSTER TIMOTHY ET AL: "RGB pixel-block point-cloud fusion for object detection", SPIE SMART STRUCTURES AND MATERIALS + NONDESTRUCTIVE EVALUATION AND HEALTH MONITORING, 2005, SAN DIEGO, CALIFORNIA, UNITED STATES, SPIE, US, vol. 11748, 12 April 2021 (2021-04-12), pages 1174804-1174804, XP060143397, ISSN: 0277-786X, DOI: 10.1117/12.2587510 ISBN: 978-1-5106-4548-6 * sections 3.1-3.4 * * abstract * ----- | 1-12 | INV. G01S7/48 G01S17/86 G01S17/89 G06T7/80 G06T11/00 |
| X | US 2016/104289 A1 (CHANG HONG [US] ET AL) 14 April 2016 (2016-04-14) * paragraphs [0020] - [0031] * ----- | 1-8, 10-12 | |
| X | US 2020/018852 A1 (WALLS JEFFREY M [US] ET AL) 16 January 2020 (2020-01-16) * paragraphs [0006], [0022] - [0039] * ----- | 1-12 | |

| TECHNICAL FIELDS SEARCHED (IPC) |
|---|
| G01S G06T |

The present search report has been drawn up for all claims

| Place of search | Date of completion of the search | Examiner |
|---|---|---|
| Munich | 26 January 2023 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6283

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2023

| Patent document cited in search report | | Publication date | Patent family member(s) | | Publication date |
|---|---|---|---|---|---|
| US 2016104289 | A1 | 14-04-2016 | AU | 2015234395 A1 | 28-04-2016 |
| | | | US | 2016104289 A1 | 14-04-2016 |
| US 2020018852 | A1 | 16-01-2020 | NONE | | |

For more details about this annex : see Official Journal of the European Patent Office, No. 12/82

**EP 4 155 758 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021124496 A